(19) Europäisches Patentamt
European Patent Office
Office européen des brevets

(11) Veröffentlichungsnummer: **0 263 524 B1**

(12) **EUROPÄISCHE PATENTSCHRIFT**

(45) Veröffentlichungstag der Patentschrift: **23.03.94**

(51) Int. Cl.5: **C08K 5/00**, //(C08K5/00,5:15, 5:52,5:53)

(21) Anmeldenummer: **87114743.5**

(22) Anmeldetag: **09.10.87**

(54) **Stabilisatorgemische für Kunststoffe.**

(30) Priorität: **10.10.86 DE 3634531**

(43) Veröffentlichungstag der Anmeldung:
**13.04.88 Patentblatt 88/15**

(45) Bekanntmachung des Hinweises auf die Patenterteilung:
**23.03.94 Patentblatt 94/12**

(84) Benannte Vertragsstaaten:
**AT BE CH DE ES FR GB IT LI NL SE**

(56) Entgegenhaltungen:

**CHEMICAL ABSTRACTS, Band 91, Nr. 18, 29. Oktober 1979, Seite 30, Zusammenfassung Nr. 141658m, Columbus, Ohio, US; & JP-A-79 55 043**

(73) Patentinhaber: **BASF Aktiengesellschaft**
**Carl-Bosch-Strasse 38**
**D-67063 Ludwigshafen(DE)**

(72) Erfinder: **Bock, Gustav, Dr.**
**Waldstrasse 16**
**D-6730 Neustadt(DE)**
Erfinder: **Trauth, Hubert**
**Milanstrasse 5**
**D-6724 Dudenhofen(DE)**
Erfinder: **Weber, Wilhelm, Dr.**
**Mandelbergstrasse 40**
**D-6730 Neustadt(DE)**
Erfinder: **Lechtken, Peter, Dr.**
**Ludwigshafener Strasse 6 b**
**D-6710 Frankenthal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft Stabilisatorgemische zur Stabilisierung von Kunststoffen bei deren Verarbeitung.

Derartige Stabilisatorgemische werden den Kunststoffen während oder vor der Verarbeitung zugesetzt, um die Kunststoffe vor Zersetzung zu schützen, wobei sich bekanntlich die Wirkungen verschiedener Stabilisatorsysteme addieren können.

Aus den deutschen Patenten 1 114 319 und 1 136 102 ist es bekannt, α-Tocopherol als Stabilisierungsmittel für Kunststoffe zu verwenden.

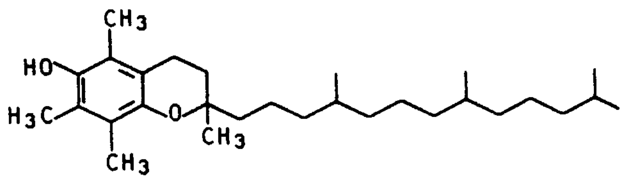

α-Tocopherol gibt jedoch zu Verfärbungen Anlaß, so daß es vor allem zur Stabilisierung von farblosen Kunststoffen praktisch nicht geeignet ist. Außerdem entspricht die Stabilisierung nicht der mit phenolischen Stabilisatoren erzielten. Aus diesem Grunde vermochte das α-Tocopherol die bisherigen handelsüblichen phenolischen Stabilisatoren nicht zu ersetzen, obwohl man dem physiologisch unbedenklichen Naturstoff α-Tocopherol an sich den Vorzug geben würde und obwohl auch die phenolischen Stabilisatoren nicht in jeder Beziehung befriedigen.

Aus der japanischen Offenlegungsschrift 53/141 354 ist bekannt, daß Mischungen aus α-Tocopherol und einem Saccharid oder einem mehrwertigen Alkohol gegen Verfärbungen stabiler als die Tocopherole allein sind, jedoch sind die Stabilisierungseffekte nicht ausreichend.

In den deutschen Offenlegungsschriften 30 10 505, 31 03 707 und 31 03 740, sowie in der EP-A1-0191463 werden Chromanderivate der Formel:

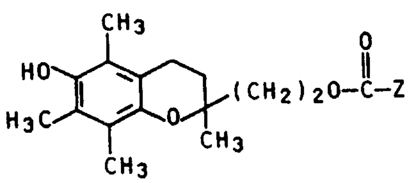

in der Z für ein $C_7$- bis $C_{30}$-Alkyl, $-CH_2-CH_2-S[C_1$- bis $C_{30}$-Alkyl] oder für

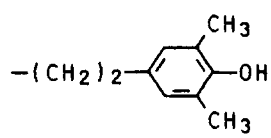

stehen, und deren Verwendung zur Stabilisierung von organischen Materialien beschrieben bzw. vorgeschlagen.

Der Einsatz von Triestern der phosphorigen Säure als Stabilisatoren in Kunststoffen ist seit langem bekannt. Ebenfalls ist z. B. in J. Voigt "Die Stabilisierung der Kunststoffe gegen Licht und Wärme", 1. Aufl., Springer Verlag, 1966, Seite 323, die Kombination von Phosphorigsäureestern mit anderen Antioxidantien als deren bevorzugte Anwendungsform beschrieben.

In dem japanischen Patent 43 15 685 wird Tris-(2,4-di-tert.-butyl-5-methylphenyl)phosphit in Kombination mit verschiedenen Antioxidantien vorgeschlagen. Solche Mischungen führen bei thermischer Belastung, wie sie bei der Verarbeitung von polyolefinischen Substraten auftritt, zu vergilbten Polymeren.

Die japanische Offenlegungsschrift 55 043/79 beschreibt Polyolefinmischungen, in denen zu den Polyolefinen Vitamine aus der Gruppe der Vitamine E und Phosphite zur Stabilisierung zugemischt werden. In den Beispielen 1 - 6 werden Vitamin E und verschiedene Phosphite im Verhältnis 1 : 1,6 bis 1 : 3,3, in den Beispielen 7 - 12 zusätzlich noch 0,01 Gew.-teile 2,6-Di-tert.butyl-p-kresol zur Verbesserung der Verfärbungsstabilität eingesetzt. Die Ergebnisse dieser Beispiele zeigen, daß diese Mischungen bei der

Vergilbung nicht zufrieden stellen können. Darüberhinaus ist durch den hohen Anteil des teuren Vitamins E ein wirtschaftliches Stabilisatorsystem nicht gegeben.

Aufgabe der vorliegenden Erfindung war es daher, im Hinblick auf die Verarbeitungsstabilität und die Verfärbung der Produkte verbesserte Stabilisatorsysteme zu finden.

Diese Aufgabe wurde durch Stabilisatorgemische gemäß Ansprüchen 1 bis 2 gelöst.

Die erfindungsgemäßen Stabilisatorsysteme bestehen aus:

a) einem Chromanderivat (I) der allgemeinen Formel

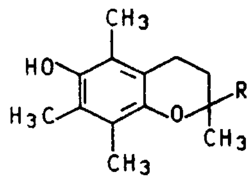

I,

wobei R =

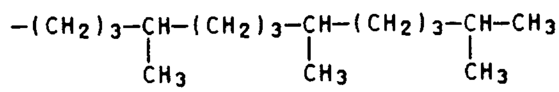

oder

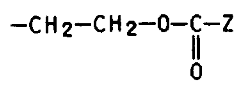

,

worin Z = $C_7$- bis $C_{30}$-Alkyl, $-CH_2CH_2-S-$[$C_1$- bis $C_{30}$-Alkyl] oder

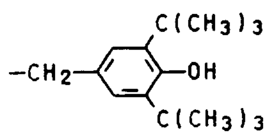

und

b) einem organischen Phosphit der allgemeinen Formel (II)

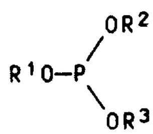

II

mit $R^1$, $R^2$, $R^3$ = gleiche oder verschiedene Alkyl- und/oder Arylgruppen oder einem organischen Phosphonit der Formel (III)

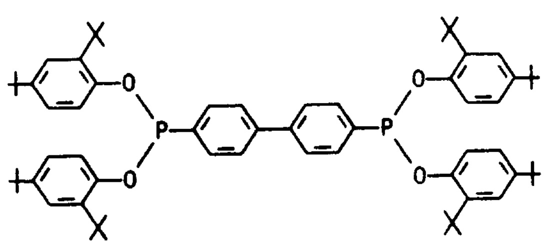

III,

worin + = $C(CH_3)_3$,

im Verhältnis (a) : (b) = 1:5 bis 1:14 Gewichtsteilen, bevorzugt im Verhältnis 1:6 bis 1:10 Gewichtsteilen. Die Alkyl- und/oder Arylgruppen $R^1$, $R^2$ und $R^3$ sind bevorzugt $C_2$- bis $C_{12}$-Alkyl- oder gegebenenfalls mit $C_4$- bis $C_{18}$-Alkylgruppen substituierte Phenylreste.

Die erfindungsgemäßen Mischungen in den beanspruchten Gewichtsverhältnissen weisen im Vergleich zu den in den Beispielen der japanischen Offenlegungsschrift 55 043/79 beschriebenen Stabilisatorgemischen, wie auch im Vergleich zu anderen bekannten Stabilisatoren - meist phenolische Verbindungen, Phosphite oder Gemische daraus - in Kunststoffen eine deutlich verbesserte Stabilisierung gegen Verfärbung und eine überlegene Verarbeitungsstabilität auf. Ein weiterer Vorteil des erfindungsgemäßen Stabilisatorsystems liegt in der Wirtschaftlichkeit dieser Mischungen durch die Verringerung des Anteils an teurem Vitamin E.

Die erfindungsgemäß einsetzbaren Phosphite sind sowohl flüssige, wie auch kristalline Produkte. Als Beispiele für Phosphite sind zu nennen:

Trisalkylphosphite mit bevorzugt langkettigen oder verzweigten Alkylgruppen wie Octyl-, Nonyl-, Isononyl-, Decyl- oder Isodecylgruppen.

Triarylphosphite mit unsubstituierten oder ein- oder mehrfach alkylsubstituierten Arylgruppen, wie Phenyl-, Nonylphenyl- oder 2,4-Di-tert.-butylphenylgruppen.

Gemischte Arylalkylphosphite, wie Diisodecylphenylphosphit oder Diphenylpentaerythritdiphosphit.

Die Phosphite der Formel II werden nach bekannten Methoden synthetisiert, beispielsweise durch Umsetzung von $PCl_3$ mit ein- oder mehrwertigen Alkoholen in Gegenwart einer organischen Base oder mit gegebenenfalls substituierten Phenolen ohne Lösungsmittel bei 20 bis 250 °C. Die gemischten Alkylarylphosphite werden beispielsweise durch Umsetzung von Triphenylphosphit mit ein- oder mehrwertigen Alkoholen in Gegenwart eines basischen Katalysators, vorzugsweise ohne Lösungsmittel hergestellt. Das Phosphonit (III) ist bekannt und im Handel unter dem Handelsnamen "Irgafos P-EPQ" der Firma Ciba-Geigy erhältlich, so daß sich eine weitere Beschreibung erübrigt.

Die erfindungsgemäße Stabilisatormischung wird in einer Konzentration von 0,005 bis 5, bevorzugt 0,05 bis 1 Gew.-%, berechnet auf das zu stabilisierende Material, eingearbeitet.

Neben dem erfindungsgemäßen Stabilisatorsystem aus Komponente a) und b) können auch weitere Stabilisatorzusätze, wie z. B. die für Stabilisierungszwecke bekannten Synergisten Calciumstearat und Distearylthiodipropionat ($S-(CH_2CH_2-COOC_{18}H_{37})_2$) in üblichen Mengen in die Kunststoffe eingemischt werden.

Mit den Stabilisatoren können auch zusammen mit Kunststoffen Konzentrate hergestellt werden und diese dann zusammen mit den zu stabilisierenden Kunststoffen verarbeitet werden.

Bei der Verarbeitung bringen je nach Anwendungsgebiet Konzentrate Vorteile, da diese bei der Verarbeitung leichter zu handhaben und zu dosieren sind.

Als Kunststoffe kommen insbesondere Thermoplaste, wie Polyvinylchlorid, Styrolpolymerisate, Polyamide, Polycarbonat, Polyphenylenoxid, Polyester, Polyolefine vorzugsweise Polyethylen und Polypropylen, Polyurethane und Duroplaste in Betracht.

Für die Eignung und Wirksamkeit von Stabilisatoren sind vor allem folgende Kriterien maßgebend:

1. Farbe

Der Thermoplast, Duroplast, Polyurethan soll durch den Stabilisator nicht verfärbt werden. Diese Forderung ist für farblose Thermoplaste, Duroplaste und Polyurethane besonders wichtig.

2. Verarbeitungsstabilität

Hierunter ist die Eigenschaftskonstanz von Thermoplasten gegenüber der mechanischen und thermischen Beanspruchung bei Formgebungsverfahren wie der Extrusion und dem Spritzguß zu verstehen.

Eine Maßzahl für die Verarbeitungsstabilitat läßt sich aus der Änderung des Schmelzverhaltens der betreffenden Thermoplaste nach mehrmaliger Formgebung unter Aufschmelzen ableiten.

Der entsprechende Schmelzindex-Test ist in ASTM D 1238-65T beschrieben. Ein wichtiges Kriterium für die Verarbeitungsstabilität ist auch die Veränderung der Farbe nach mehrmaliger Formgebung unter Aufschmelzen. Diese Veränderung sollte möglichst gering sein: Yellowness-Test (ASTMD 1925).

In Bezug auf Farbstabilität und Verarbeitungsstabilität zeigen die Mischungen im erfindungsgemäßen Gewichtsverhältnis besondere Vorteile gegenüber den in der japanischen Offenlegungsschrift 55 043/79 beschriebenen Mischungen und auch den phenolischen Antioxidantien des Standes der Technik.

Die Erfindung soll durch die folgenden Beispiele zusätzlich erläutert werden.

Die Stabilisator enthaltenden Polymere wurden hinsichtlich Farbqualität und Verarbeitungsstabilität beurteilt.

I. Die Farbqualität wurde als Yellowness-Index YI angegeben. Dieser wurde nach dem Yellowness-Test nach ASTMD 1925 in Polypropylen bestimmt.

Die angegebenen YI-Werte sind jeweils das Mittel aus zwei Messungen. Je höher diese Werte, um so

geringer ist die Farbqualität, d. h. um so stärker die Verfärbung.

Bei der Farbqualität entsprechen die genannten Werte den nachfolgend angegebenen visuellen Eindrükken

bis 2 nicht erkennbare Verfärbung
3 - 5 sehr schwache Verfärbung
5 - 10 schwache, aber bereits deutlich erkennbare Verfärbung
10 - 20 merkliche Verfärbung
> 20 starke Verfärbung

Der Stabilisator wurde in allen Fällen in gleicher Weise eingearbeitet und das Material zu Granulat verarbeitet, aus dem Platten von 1 mm Schichtdicke geformt wurden. Am letzteren wurde der Yellowness-Index bestimmt.

II. Die Verarbeitungsstabilität wurde an gleichem Polypropylen (wie bei (I)) bestimmt. Hierzu wurde das Gemisch extrudiert und granuliert. An dieser einmal extrudierten Probe wurde der Schmelzindex nach DIN 53 735 bestimmt: $MFI_1$. Diese Probe wurde dann noch 7 mal extrudiert und granuliert und an diesem Produkt dann der Schmelzindex wie oben bestimmt: $MFI_8$.

Aus den Schmelzindices wurde der Quotient

$$\frac{MFI_8}{MFI_1}$$

gebildet.

Je größer der Quotient ist, um so geringer ist die Verarbeitungsstabilität.

Weiterhin wurde an den Proben nach einmaligem und achtmaligem Extrudieren und Granulieren der Yellowness-Index $YI_1$ und $YI_8$ nach (I) bestimmt.

Als Polypropylen (PP) wurde in allen Fällen additivfreies dechloriertes Polypropylen verwendet.

Folgende Stabilisatorkomponenten wurden in den Beispielen 1 - 24 verwendet:

Stabilisator a:

($a^1$) = DL-α-Tocopherol
($a^2$) = 2,5,7,8-Tetramethyl-2-(2'stearyloxyethyl)-chroman

Stabilisator b:

($b^1$) = Trisnonylphenylphosphit

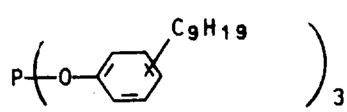

($b^2$) = Tetraphenyldipropylenglykoldiphosphit

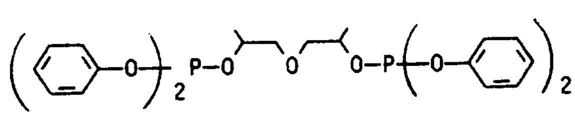

($b^3$) = Tris-(2,4-di-tert.-butylphenyl)phosphit

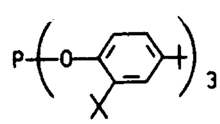

($b^4$) = Tetrakis(2,4-di-tert.-butylphenyl)-4,4'-biphenylendiphosphit

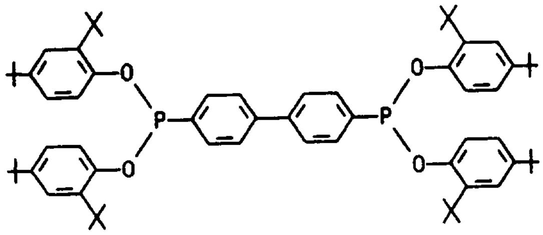

Tabelle: Erfindungsgemäße Beispiele

| Beispiel | Stabilisator (a) | Stabilisator (b) | Konz.: Gew. % bez. auf PP | Verhältnis (a) : (b) Gew.-Teile | Schmelzindex MFI $MFI_1$ g/10min | $MFI_8$ g/10min | Yellowness-Index $YI_1$ | $YI_8$ |
|---|---|---|---|---|---|---|---|---|
| 1 | ($a^1$) | Trisnonylphenylphosphit | 0,1 | 1 : 5 | 4,2 | 4,8 | 1,0 | 4,5 |
| 2 | ($a^1$) | Trisnonylphenylphosphit | 0,1 | 1 : 6 | 4,2 | 4,8 | 0,6 | 3,4 |
| 3 | ($a^1$) | Trisnonylphenylphosphit | 0,1 | 1 : 8 | 4,1 | 4,7 | 0,7 | 3,5 |
| 4 | ($a^1$) | Trisnonylphenylphosphit | 0,1 | 1 : 10 | 4,2 | 4,9 | 0,7 | 3,6 |
| 5 | ($a^1$) | Trisnonylphenylphosphit | 0,1 | 1 : 12 | 4,5 | 6,6 | 0,6 | 3,5 |
| 6 | ($a^1$) | Trisnonylphenylphosphit | 0,1 | 1 : 14 | 4,9 | 8,0 | 0,7 | 3,6 |
| 7 | ($a^2$) | Trisnonylphenylphosphit | 0,1 | 1 : 6 | 4,3 | 5,8 | 0,6 | 3,2 |
| 8 | ($a^1$) | Tetraphenyldipropylenglykoldiphosphit | 0,1 | 1 : 6 | 4,3 | 5,5 | 0,7 | 3,6 |
| 9 | ($a^2$) | " " | 0,1 | 1 : 6 | 4,4 | 6,0 | 0,7 | 3,5 |
| 10 | ($a^1$) | Tris-(2,4-di-tert.-butylphenyl)phosphit | 0,1 | 1 : 6 | 4,4 | 6,2 | 0,6 | 3,2 |
| 11 | ($a^2$) | " " | 0,1 | 1 : 6 | 4,5 | 6,4 | 0,6 | 3,1 |
| 12 | ($a^1$) | Tetrakis(2,4-di-tert.-butylphenyl)-4-4'-biphenylendiphosphonit | 0,1 | 1 : 6 | 4,3 | 5,9 | 0,6 | 3,1 |
| 13 | ($a^2$) | " " | 0,1 | 1 : 6 | 4,4 | 6,1 | 0,6 | 3,0 |

Tabelle: Vergleichsbeispiele

| Beispiel | Stabilisat. (a) | Stabilisator (b) | Konz.: Gew. % bez. auf PP | Verhältnis (a) : (b) Gew.-Teile | Schmelzindex MFI $MFI_1$ g/10min | $MFI_8$ g/10min | Yellowness-Index $YI_1$ | $YI_8$ |
|---|---|---|---|---|---|---|---|---|
| 14 | ($a^1$) | - | 0,1 | - | 4,5 | 9,5 | 18 | 30,0 |
| 15 | ($a^2$) | - | 0,1 | - | 4,5 | 9,0 | 14 | 26,0 |
| 16 | - | Trisnonylphenylphosphit | 0,1 | - | 4,7 | 9,4 | 0,6 | 3,0 |
| 17 | - | Tetraphenyldipropylenglykoldiphosphit | 0,1 | - | 4,8 | 10,6 | 0,6 | 3,0 |
| 18 | - | Tris-(2,4-ditert.-butylphenyl)-phosphit | 0,1 | - | 4,9 | 10,8 | 0,6 | 2,9 |
| 19 | - | Tetrakis(2,4-ditert.-butylphenyl)-4,4'-biphenyl-diphosphonit | 0,1 | - | 4,6 | 8,3 | 0,6 | 2,8 |
| 20 | ($a^1$) | Trisnonylphenylphosphit | 0,1 | 1 : 1 | 4,3 | 5,3 | 14,0 | 26,0 |
| 21 | ($a^1$) | Trisnonylphenylphosphit | 0,1 | 1 : 2 | 4,3 | 5,2 | 10,0 | 23,0 |
| 22 | ($a^1$) | Trisnonylphenylphosphit | 0,1 | 1 : 4 | 4,1 | 4,8 | 3,0 | 9,0 |
| 23 | ($a^1$) | Trisnonylphenylphosphit | 0,1 | 1 : 15 | 5,7 | 11,0 | 0,7 | 3,7 |
| 24 | ($a^1$) | Trisnonylphenylphosphit | 0,1 | 1 : 16 | 6,0 | 11,5 | 0,6 | 3,7 |

## Patentansprüche

1. Stabilisatorgemische zur Stabilisierung von Kunststoffen bestehend aus

a) einem Gewichtsteil Chromanderivat (I) der allgemeinen Formel

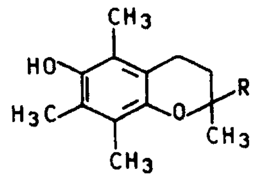

I,

wobei R =

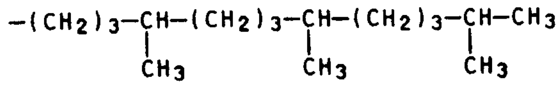

oder

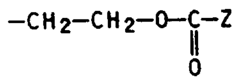

,

worin Z = $C_7$- bis $C_{30}$-Alkyl, $-CH_2CH_2-S-[C_1$- bis $C_{30}$-Alkyl] oder

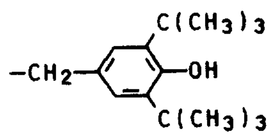

und

b) 5 bis 14 Gewichtsteilen eines organischen Phosphits der allgemeinen Formel (II)

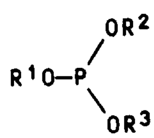

II

mit $R^1$, $R^2$, $R^3$ = gleiche oder verschiedene Alkyl- und/oder Arylgruppen oder eines organischen Phosphonits der Formel (III)

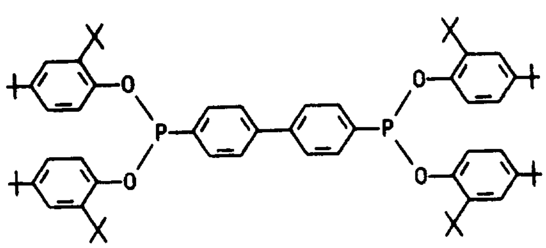

III,

worin + = $C(CH_3)_3$.

**2.** Stabilisatorgemisch gemäß Anspruch 1, dadurch gekennzeichnet, daß das Mischungsverhältnis der Komponenten (a):(b) = 1:6 bis 1:10.

**3.** Kunststoffe enthaltend 0,005 bis 5,0 Gewichtsprozent, bezogen auf das zu stabilisierende Material, eines Stabilisatorgemischs gemäß Anspruch 1 oder 2.

## Claims

**1.** A stabilizer mixture for stabilizing a plastics material, comprising
a) one part by weight of a chroman derivative (I) of the formula

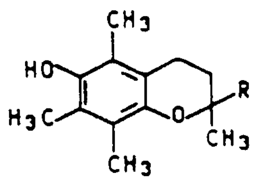

I,

where R =

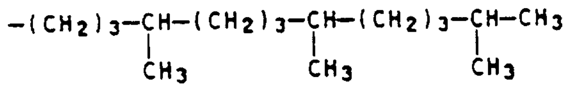

or

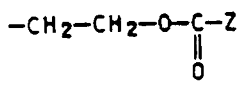

,

where Z = $C_7$-$C_{30}$-alkyl, -$CH_2CH_2$-S-[$C_1$-$C_{30}$-alkyl] or

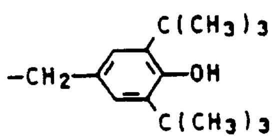

and
b) from 5 to 14 parts by weight of an organic phosphite of the formula (II)

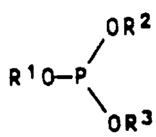

II

where $R^1$, $R^2$ and $R^3$ are identical or different alkyl and/or aryl or of an organic phosphonite of the formula (III)

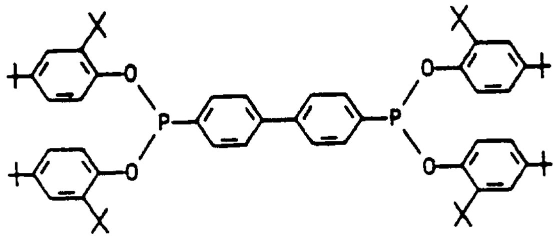

III,

where + is $C(CH_3)_3$.

**2.** A stabilizer mixture as claimed in claim 1, wherein the mixing ratio of components (a):(b) is from 1:6 to 1:10.

**3.** A plastics material containing from 0.005 to 5.0 percent by weight, based on the material to be stabilized, of a stabilizer mixture as claimed in claim 1 or 2.

**Revendications**

**1.** Mélanges stabilisateurs destinés à la stabilisation de matières plastiques, qui se compose de

a) une partie en poids d'un dérivé du chromane (I) de la formule générale

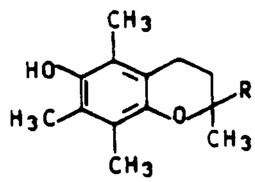 I,

dans laquelle R =

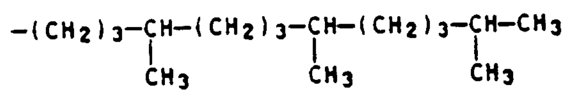

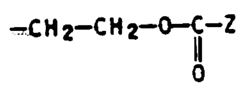 ,

où Z = alkyle en $C_7$ à $C_{30}$ $-CH_2CH_2-S-$[alkyle en $C_1$ à $C_{30}$] ou

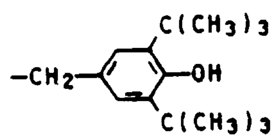

et

(b) 5 à 14 parties en poids d'un phosphite organique de la formule générale (II)

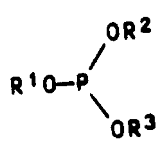 II

où $R^1$, $R^2$, et $R^3$ représentent des radicaux alkyle et/ou aryle identiques ou différents, ou un phosphonite organique de la formule (II)

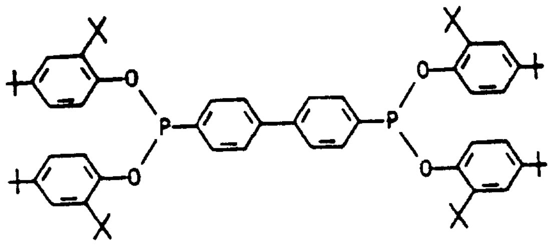

III.

où + = $C(CH_3)_3$.

**2.** Mélanges stabilisateurs suivant la revendication 1, caractérisés en ce que le rapport de mélange des composants (a):(b) varie de 1:6 à 1:10.

**3.** Matières plastiques contenant de 0,005 à 5,0% en poids, par rapport à la matière à stabiliser, d'un mélange stabilisant suivant l'une quelconque des revendications 1 et 2.